# EUROPÄISCHE PATENTANMELDUNG

(11) **EP 1 251 044 A2**
(43) Veröffentlichungstag der Anmeldung: **23.10.2002**
(21) Anmeldenummer: 02007385.4
(22) Anmeldetag: 09.04.2002
(51) Int. Cl.: B60R 21/20

(54) **Gassackmodul**

(30) Priorität: 18.04.2001 DE 10118983
(71) Anmelder: TRW Automotive Safety Systems GmbH & Co. KG, 63743 Aschaffenburg (DE)
(72) Erfinder: Bieber, Udo, 63843 Niedernberg (DE); Kreuzer, Martin, 63839 Kleinwallstadt (DE); Neupert, Ralph, 63839 Kleinwallstadt (DE)
(74) Vertreter: Kitzhofer, Thomas, Dipl.-Ing.

(57) **Zusammenfassung**

Ein Gassackmodul ist mit einer im eingebauten Zustand von außen sichtbaren Abdeckkappe (16), die eine Austrittsöffnung (50) für einen Gassack (24) verdeckt, wenigstens einer in der Abdeckkappe (16) integrierten Anzeige (36) und einer rückseitig der Abdeckkappe (16) vorgesehenen Beleuchtung (34) für die Anzeige (36) ausgestattet, wobei die Abdeckkappe (16) eine von außen sichtbare Vorderwand (18) mit einem die Austrittsöffnung (50) verdeckenden Abschnitt (30) hat, der einstückig mit einem über der Beleuchtung (34) liegenden Anzeigeabschnitt (32) verbunden ist, in dem die Abdeckung (16) transparent oder transluzent ausgebildet ist. Der Anzeigeabschnitt ist aus einer ersten Materialkomponente der Abdeckkappe (16). Die Abdeckkappe (16) weist eine zweite Materialkomponente auf, welche eine Trägerschicht (38) in Form eines Topfes hat, dessen Boden den die Austrittsöffnung (50) verschließenden Abschnitt (30) bildet und dessen Umfangswand (20) einen Aufnahmeraum (22) für den Gassack (24) seitlich begrenzt.

## Beschreibung

Die Erfindung betrifft einen Gassackmodul zum Zurückhalten eines Fahrzeuginsassen. Insbesondere betrifft die Erfindung ein im Lenkrad integriertes Gassackmodul.

Es sind Gassackmodule bekannt, die zusätzlich von außen montierte Multifunktionstaster zur Betätigung des Telefons, des Radios und dergleichen, beinhalten. Hierbei können diese Taster als kombinierte Bedienungs- und Anzeigetaster ausgelegt sein. Durch Integration von Leuchtdioden sind die Symbole auch bei Nachtfahrten lesbar. Das Hinzufügen von Multifunktionstastern geht immer mit einer Spaltbildung zwischen den Tastern und der Abdeckkappe, genauer gesagt deren Vorderwand, die im eingebauten Zustand vorderseitig sichtbar ist, einher. Es erfordert einen großen Aufwand, die Montagetoleranzen so gering und gleichmäßig wie möglich zu halten. Trotz dieser Nachteile besteht ein Bedürfnis, zusätzliche Informationsanzeigen im Fahrzeug unterzubringen, denn die modernen Fahrzeuge werden mit zunehmenden Bedienfunktionen ausgestattet, so daß es teilweise schwierig ist, alle Anzeigen im Cockpit unterzubringen. Es gibt die Bestrebung, von außen qualitativ hochwertig aussehende Module zu schaffen, in denen die Anzeigen integriert sind, ohne daß ein Spalt zwischen den Anzeigen und dem Rest der Abdeckkappe auftritt. Die Herstellung eines solchen Gassackmoduls, insbesondere die Erzielung einer ausreichenden Stabilität der Abdeckkappe, ist jedoch problematisch.

Die Erfindung schafft ein Gassackmodul, das von außen qualitativ hochwertig aussieht und in das die Anzeigen integriert werden können.

Das erfindungsgemäße Gassackmodul hat hierzu eine im eingebauten Zustand von außen sichtbare Abdeckkappe, die eine Austrittsöffnung für einen Gassack verdeckt, wenigstens eine in der Abdeckkappe integrierte Anzeige und eine rückseitig der Abdeckkappe vorgesehene Beleuchtung für die Anzeige. Die Abdeckkappe hat an ihrer von außen sichtbaren Vorderwand einen die Austrittsöffnung verdeckenden Abschnitt, der einstückig mit einem über der Beleuchtung liegenden Anzeigeabschnitt verbunden ist, in dem die Abdeckung transparent oder transluzent ausgebildet ist. Der Anzeigeabschnitt besteht aus einer ersten Materialkomponente der Abdeckkappe. Darüber hinaus ist eine zweite Materialkomponente in der Abdeckkappe vorgesehen, welche eine Trägerschicht in Form eines Topfes bildet. Der Boden des Topfes verschließt die Austrittsöffnung, und die Umfangswand des Topfes begrenzt einen Aufnahmeraum für den Gassack in seitlicher Richtung.

Bei der Erfindung erstreckt sich die Abdeckkappe bis über die Beleuchtung, d.h. sie geht in die Anzeige über und ist im Bereich der Beleuchtung transparent oder transluzent ausgebildet. Durch die einstückige Ausführung entsteht kein Spalt, so daß sich von außen eine glatte sichtbare Vorderwand dem Insassen präsentiert. Die Anzeige kann entweder rückseitig der Vorderwand unter dem transparenten oder transluzenten Bereich liegen. Darüber hinaus kann aber auch die Abdeckkappe selbst die Anzeige bilden, indem die Abdeckkappe längs Linien zur Schaffung eines Symbols durchsichtig ist, z.B. indem der durchsichtige Abschnitt ein "+" oder "-" bildet. Selbstverständlich könnte hinter dem transparenten Bereich auch ein größeres Anzeigefeld liegen, z.B. ein beleuchteter LCD-Bildschirm, der verschiedene Anzeigen liefern kann. Die Stabilität der Abdeckkappe wird aber, und dies ermöglicht erst die transparente oder transluzente Ausbildung der ersten Materialkomponente, durch die Trägerschicht erreicht. Durch die topfförmige Ausführung der Trägerschicht werden die beim Öffnen der Abdeckkappe meist beanspruchten Bereiche, nämlich seitlich zum Gassack und in Richtung nach außen stabilisiert.

Vorzugsweise ist die erste Materialkomponente im Bereich des Bodens mit der zweiten Materialkomponente verbunden und erstreckt sich über den Rand des Bodens seitlich hinaus und bildet in diesem Bereich den Anzeigeabschnitt.

Die transparente oder transluzente Schicht bildet dabei den Rand der Vorderwand.

Im Bereich des Anzeigeabschnitts hat die Abdeckkappe vorzugsweise wenigstens abschnittsweise eine geringere Dicke, damit eine größere Lichtdurchlässigkeit erreicht wird.

Die zuvor erwähnte Möglichkeit, daß die Abdeckkappe selbst eine Anzeige bildet, kann so ausgeführt sein, daß die Abdeckkappe eine transparente/transluzente Schicht mit einer außenseitigen, undurchlässigen Deckschicht aufweist, die partiell, nämlich im Bereich der Anzeige, nicht vorhanden ist.

Diese Deckschicht kann beispielsweise gemäß eines besonders vorteilhaften Verfahrens zum Herstellen der Abdeckung für das erfindungsgemäße Modul nachträglich von außen abgetragen werden, z.B. mittels eines Lasers. Alternativ könnte natürlich die transparente Schicht beim Auftragen der undurchsichtigen Deckschicht partiell abgedeckt werden.

Eine vorteilhafte Deckschicht stellt ein Lack dar, der farblich und von seiner Oberfläche zum übrigen Innenraum abgestimmt ist.

Die Anzeige, z.B. die Symbole, können aber bereits in die Spritzgußform bei der Herstellung der Abdeckkappe eingebracht sein und mit einer dünnen, lichtdurchlässigen Lackschicht überzogen werden.

Als Werkstoffe für den transparenten Anzeigeabschnitt bietet sich thermoplastisches Polyurethan oder thermoplastisches Polyester an, die im Spritzgußverfahren zur Abdeckkappe verarbeitet werden.

Die transparente oder transluzente Schicht kann nur einen Abschnitt der Vorderwand bilden oder aber sich über die gesamte Vorderwand erstrecken, was herstellungstechnische Vorteile bieten kann.

Die bevorzugte Ausführungsform sieht vor, daß die Beleuchtung außerhalb des Aufnahmeraums gelegen ist, vorzugsweise unmittelbar durch die Umfangswand vom Aufnahmeraum getrennt. Damit wird verhindert, daß bei der Gassackentfaltung der Gassack an der Beleuchtung der Anzeige scheuert und die Beleuchtung oder der Gassack beschädigt wird. Durch die Umfangswand wird eine räumliche Trennung des Aufnahmeraums von dem Bereich mit der Beleuchtung erreicht. Auch ein Mitreißen der Beleuchtung durch den sich entfaltenden Gassack kann ausgeschlossen werden. Die Vorderwand reißt hierzu lediglich bis zum Übergang der Vorderwand zur Umfangswand auf.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 Einen Querschnitt durch eine Ausführungsform des erfindungsgemäßen Gassackmoduls,
- Figur 2 eine Draufsicht auf die Vorderwand im Bereich der Anzeige und
- Figur 3 einen Querschnitt durch ein Gassackmodul gemäß einer zweiten Ausführungsform.

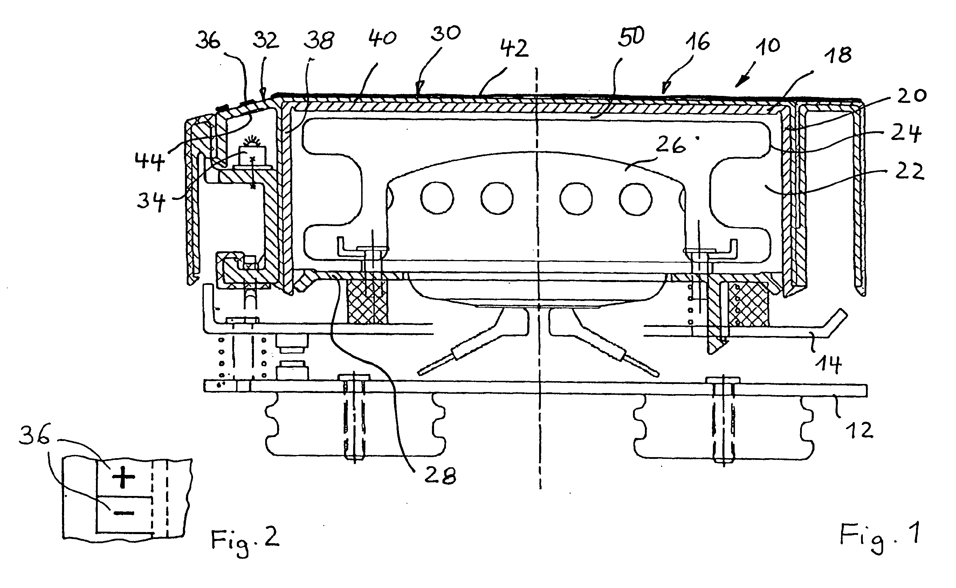

In Figur 1 ist ein Gassackmodul 10 dargestellt, das in ein Fahrzeuglenkrad integriert ist. Mit 12 ist ein Fahrzeugskelett bezeichnet, an dem das Gassackmodul 10 über eine sogenannte Hupenplatte 14 befestigt ist. Das Gassackmodul umfaßt eine topfförmige Abdeckkappe 16 mit einer im eingebauten Zustand des Gassackmoduls 12 von außen sichtbaren Vorderwand 18 und einer einstückig angeformten, rückseitig im rechten Winkel zur Vorderwand 18 abstehenden Umfangswand 20, die einen Aufnahmeraum 22 für einen Gassack 24 und einen Gasgenerator 26 begrenzt. Der Aufnahmeraum 22 ist rückseitig durch eine Rückwand 28 geschlossen.

Die Vorderwand 18 der Abdeckkappe 16 umfaßt mehrere Abschnitte, nämlich einen den Aufnahmeraum 22 vorderseitig schließenden Abschnitt 30, der sich bis zur Umfangswand 20 erstreckt, und einen sich seitlich daran einstückig anschließenden Anzeigeabschnitt 32, der am Rand der Abdeckkappe 16 liegt und Anzeigen, die auch bedienbar sein können, abdeckt oder sogar bildet. Unterhalb des Anzeigeabschnitts 32 ist eine Beleuchtung 34 zum Beleuchten der Anzeige 36 (in Figur 2 beispielsweise ein "+" oder "-" oder ein anderes Symbol) angeordnet. Die Beleuchtung ist vorzugsweise eine LCD-Lampe.

Die Anzeige ist bei der Ausführungsform nach Figur 1 durch eine besondere Ausführung der Abdeckkappe 16 gebildet und in diese integriert. Die Abdeckkappe 16 hat eine topfförmige Trägerschicht 38, die innenseitig den Aufnahmeraum 22 auskleidet und mit ihrem Boden innenseitig den Abschnitt 30 bildet, und eine die Trägerschicht 38 außenseitig umgebende Schicht 40 aus transparentem oder transluzentem Material, vorzugsweise thermoplastischem Polyurethan oder thermoplastischem Polyester. Die Schicht 40 ist aus einer ersten und die Trägerschicht 38 aus einer zweiten Materialkomponente. Die Schicht 40 erstreckt sich über die gesamte Vorderwand, d.h. vom Abschnitt 30 bis in den Anzeigeabschnitt 32, wobei die Schicht 40 in den beiden Abschnitten 30, 32 einstückig ineinander übergeht, so daß kein Spalt oder dergleichen zwischen dem Anzeigeabschnitt 32 und dem Rest der Vorderwand 18 entsteht. Die Trägerschicht 38 und die transparente oder transluzente Schicht 40 sind im Abschnitt 30 miteinander verbunden. Die transluzente Schicht 40 steht seitlich gegenüber der Trägerschicht 38 unter Bildung des Randes der Vorderwand 18 vor. Diese Ausführungsform erlaubt es, auf einfache Weise verschiedene Anzeigen 36 seitlich des Abschnittes 30, je nach Ausstattung des Fahrzeugs, unterzubringen. Dadurch, daß sich die transparente oder transluzente Schicht 40 vollflächig über die gesamte Vorderwand 18 erstreckt, sind auch keine Ermüdungsbrüche im Bereich der Vorderwand oder Risse zwischen verschiedenen Materialkomponenten im sichtbaren Bereich zu erwarten. Außenseitig ist auf die transparente Schicht 40 noch ein Lack 42 aufgespritzt, um die Außenfläche der Vorderwand 18 dem Rest des Lenkrads und dem Innenraumdesign anzupassen. Im Bereich des Anzeigeabschnitts 32 wird der Lack 42 entlang von Linien entfernt, beispielsweise mittels eines Lasers, um Symbole und damit die Anzeige 36 zu bilden.

Alternativ können die Symbole auch in den Anzeigeabschnitt 32 eingebracht sein, indem sie auf einer Folie aufgedruckt werden. In diesem Fall muß jedoch außenseitig eine dünne, lichtdurchlässige Lackschicht wenigstens im Bereich des Anzeigeabschnitts 32 vorgesehen sein.

Um die Lichtdurchlässigkeit im Anzeigeabschnitt 32 zu erhöhen, weist die Abdeckung im Bereich der Anzeige 36 eine geringere Dicke auf als im übrigen Teil des Anzeigeabschnitts. Eine entsprechende Vertiefung ist mit 44 bezeichnet.

Im Anzeigeabschnitt 32 kann auch ein Schalter integriert sein, indem beispielsweise der Anzeigeabschnitt so flexibel ausgeführt ist, daß durch Drücken des Anzeigeabschnitts im Bereich der entsprechenden Anzeige 36 ein unter der Anzeige liegender Mikroschalter oder dergleichen betätigt wird.

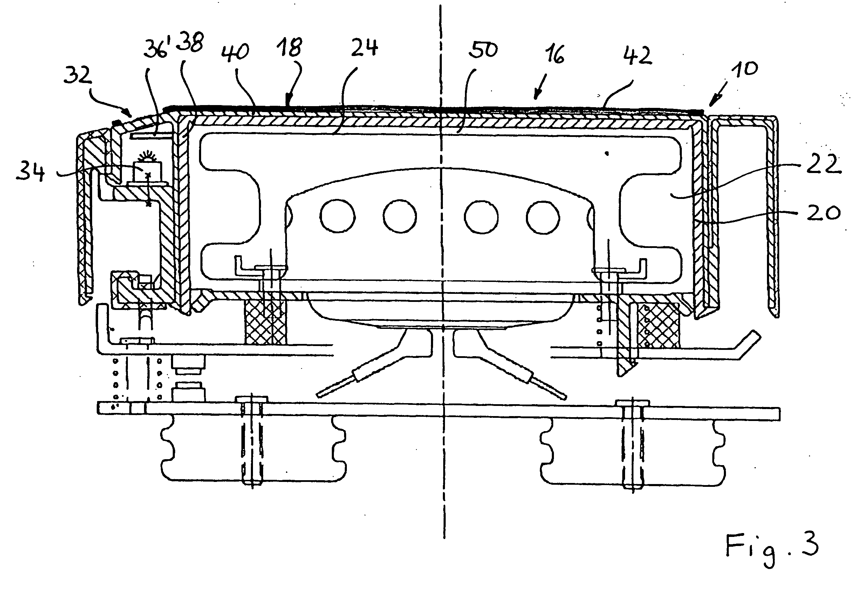

Die in Figur 2 dargestellte Ausführungsform entspricht im wesentlichen der in Figur 1 dargestellten, mit der Ausnahme, daß die Anzeige 36 nicht in die Abdeckkappe integriert ist, sondern diese über einen rechteckigen Bereich durchsichtig gehalten ist. Unterhalb der Abdeckkappe ist ein großflächiges Anzeigefeld 36' vorgesehen, das durch die Beleuchtung 34 auch in der Nacht sichtbar gemacht wird. Im übrigen entspricht die in Figur 3 dargestellte Ausführungsform der zuvor beschriebenen.

Beim Aufreißen des Gassacks besteht nicht die Gefahr, daß der Gassack die Beleuchtung 34 oder die Anzeige 36, 36' zerstört, denn die Vorderwand reißt nur im Bereich des Abschnitts 30 auf, der bis zur Umfangswand 20 verläuft Nach dem Aufschwenken wird eine Austrittsöffnung 50 freigelegt, die zuvor vom Abschnitt 30 verdeckt war.

Die Abdeckkappe wird im Spritzgußverfahren hergestellt, wobei die Herstellung der einzelnen Schichten aufeinanderfolgende Verfahrensschritte bilden.

## Patentansprüche

1. Gassackmodul, mit
einer im eingebauten Zustand von außen sichtbaren Abdeckkappe (16), die eine Austrittsöffnung (50) für einen Gassack (24) verdeckt,
wenigstens einer in der Abdeckkappe (16) integrierten Anzeige (36; 36') und
einer rückseitig der Abdeckkappe (16) vorgesehenen Beleuchtung (34) für die Anzeige (36; 36'),
wobei die Abdeckkappe (16) eine von außen sichtbare Vorderwand (18) mit einem die Austrittsöffnung (50) verdeckenden Abschnitt (30) hat, der einstückig mit einem über der Beleuchtung (34) liegenden Anzeigeabschnitt (32) verbunden ist, in dem die Abdeckung (16) transparent oder transluzent ausgebildet ist,
wobei der Anzeigeabschnitt aus einer ersten Materialkomponente der Abdeckkappe (16) ist und wobei die Abdeckkappe (16) eine zweite Materialkomponente aufweist, welche eine Trägerschicht (38) in Form eines Topfes aufweist, dessen Boden den die Austrittsöffnung (50) verschließenden Abschnitt (30) bildet und dessen Umfangswand (20) einen Aufnahmeraum (22) für den Gassack (24) seitlich begrenzt.

2. Gassackmodul nach Anspruch 1, **dadurch gekennzeichnet, daß** die Abdeckkappe (16) im Anzeigeabschnitt (32) abschnittsweise eine geringere Dicke hat.

3. Gassackmodul nach Anspruch 1 oder 2, **dadurch gekennzeichnet, daß** rückseitig des Anzeigeabschnitts (32) ein von außen sichtbares Anzeigefeld (36') liegt.

4. Gassackmodul nach Anspruch 1 oder 2, **dadurch gekennzeichnet, daß** die Abdeckkappe (16) eine transparente oder transluzente Schicht (40) mit einer außenseitigen, undurchsichtigen Deckschicht (42) hat, die im Bereich der Anzeige (36) nicht vorhanden ist.

5. Gassackmodul nach Anspruch 4, **dadurch gekennzeichnet, daß** die Deckschicht (42) nachträglich von außen abgetragen ist.

6. Gassackmodul nach Anspruch 4 oder 5, **dadurch gekennzeichnet, daß** die Deckschicht (42) ein Lack ist.

7. Gassackmodul nach einem der Ansprüche 4 bis 6, **dadurch gekennzeichnet, daß** sich die transparente oder transluzente Schicht (40) wenigstens nahezu über die gesamte Vorderwand (18) und den Boden der Trägerschicht erstreckt.

8. Gassackmodul nach einem der Ansprüche 4 bis 7, **dadurch gekennzeichnet, daß** die transparente oder transluzente Schicht (40) die erste Materialkomponente bildet und sich seitlich über die Umfangswand (20) unter Bildung des Randes der Vorderwand erstreckt.

9. Gassackmodul nach einem der vorhergehenden Ansprüche, **dadurch gekennzeichnet, daß** die Beleuchtung (34) und die Anzeige (36) außerhalb des Aufnahmeraums (22) liegen.
